# FASCICULE DE BREVET EUROPEEN

(11) **EP 3 856 602 B1**
(45) Date de publication et mention de la délivrance du brevet: **21.02.2024**
(21) Numéro de dépôt: 19737098.4
(22) Date de dépôt: 08.07.2019
(51) Int. Cl.: B60W 50/14, B60W 50/08

(54) **SYSTEME D'AFFICHAGE D'INFORMATIONS PAR SELECTION MANUELLE OU AUTOMATIQUE PARMI UNE PLURALITE DE MODES D'AFFICHAGE CLASSES EN FONCTION DE LEUR NIVEAU DE DECENTRAGE PAR RAPPORT AU VEHICULE**
SYSTEM ZUR ANZEIGE VON INFORMATIONEN DURCH MANUELLE ODER AUTOMATISCHE AUSWAHL UNTER EINER VIELZAHL VON ANZEIGEMODI, DIE GEMÄSS IHREM VERSETZUNGSGRAD IN BEZUG AUF DAS FAHRZEUG KLASSIFIZIERT SIND
SYSTEM FOR DISPLAYING INFORMATION BY MANUAL OR AUTOMATIC SELECTION AMONG A PLURALITY OF DISPLAY MODES CLASSIFIED ACCORDING TO THEIR LEVEL OF OFF-CENTRING WITH RESPECT TO THE VEHICLE

(30) Priorité: 01.08.2018 FR 1857204
(43) Date de publication de la demande: 04.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: ENREGLE, Eric, 92130 ISSY-LES-MOULINEAUX (FR)
(74) Mandataire: Renault Group
(86) Numéro de dépôt international: PCT/EP2019/068262
(87) Numéro de publication internationale: WO 2020/025261

(56) Documents cités:
- EP-A1- 1 800 959
- EP-A1- 2 181 881
- WO-A1-2018/024413
- WO-A2-2015/014894
- DE-A1-102010 041 961

## Description

La présente invention concerne le domaine de l'affichage d'informations dans un véhicule automobile, et notamment les moyens techniques utilisés pour générer un tel affichage.

De nos jours, les véhicules automobiles proposent l'affichage, soit sur le tableau de bord, soit en façade centrale, ou encore sur l'affichage tête haute, ou Head up display, d'acronyme HUD en termes anglo-saxons, d'une pluralité d'informations, de manière aléatoire et indépendante du mode de conduite.

Le document WO 2015/014894 décrit un procédé de commande d'un véhicule commuté entre un mode de conduite manuel et un mode de conduite automatique, en mode de conduite manuelle, seules les informations relatives à la conduite sont affichées et en mode de conduite automatique, les données multimédia peuvent être affichées, mais ce procédé n'aide pas le conducteur à porter son attention sur certaines informations.

De même, le document EP 1800959 décrit un système d'affichage de tableau de bord pour afficher des informations sur le véhicule, sur les équipements et des informations de sécurité sous forme d'images mais sans aider le conducteur à porter son attention sur certaines informations.

Il existe ainsi un besoin d'améliorer les systèmes d'affichage d'informations dans un véhicule automobile.

Le but de l'invention est donc de porter l'attention, notamment du conducteur sur des informations de diverses natures, classées par ordre de décentrage par rapport au véhicule et de permettre l'accès à ces informations en fonction du mode de conduite, tel que par exemple le mode de conduite manuelle, le mode de conduite semi-autonome ou le mode de conduite autonome.

On entend par « conduite semi-autonome », une conduite automatisée par l'activation, par exemple, des systèmes d'aide au maintien de voie dits « lane keeping assist », d'acronyme « LKA » en termes anglo-saxons qui permettent de repositionner automatiquement le véhicule sur sa voie, des systèmes dits « lane centering assist», d'acronyme « LCA » en termes anglo-saxons qui permettent de maintenir le véhicule dans sa voie, ou encore des systèmes d'aide dits « adaptive cruise control », d'acronyme « ACC » en termes anglo-saxons capable de réguler la vitesse et de maintenir automatiquement une distance de sécurité par rapport au véhicule qui précède.

La présente invention a pour objet un système d'affichage d'informations destiné à être intégré dans un véhicule automobile comprenant au moins un tableau de bord, une console centrale, un écran d'affichage en façade centrale et un pare-brise avant.

Ledit système d'affichage comprend un dispositif de sélection, manuelle ou automatique, parmi au moins trois modes d'affichage contenant chacun des informations présentant des niveaux progressifs de décentrage par rapport au véhicule. Par « décentrage progressif », on entend l'éloignement de l'information du véhicule et de la conduite, depuis une information centrée sur le véhicule et/ou la conduite jusqu'à une information totalement décentrée, c'est-à-dire décorrélée du véhicule et de son déplacement.

Plus précisément le décentrage progressif est le suivant, en partant des informations les plus centrées vers les informations les plus décentrées : les informations sur les paramètres du véhicule, les informations sur le contexte de roulage dans lequel le véhicule circule, les informations sur la connexion avec autrui dans l'environnement proche, les informations sur la découverte du territoire dans l'environnement proche, et les informations connexion élargie décorrélée de l'environnement proche de roulage.

Les informations sont ainsi classées en fonction de leur degré de décentrage par rapport au véhicule.

Le dispositif de sélection, manuelle ou automatique, parmi les au moins trois modes d'affichage peut être un bouton rotatif situé sur la console centrale. En variante, on pourrait prévoir un bouton rotatif situé sur la planche de bord, ou encore situé sur la manette d'essuie-glace ou de clignotants.

Avantageusement, le système comprend un module de vérification du mode de conduite activé, tel que par exemple le mode de conduite manuelle, le mode de conduite semi-autonome ou le mode de conduite autonome.

Par exemple, le système comprend un module de transmission de l'affichage sur au moins un dispositif d'affichage en fonction du mode d'affichage sélectionné et du mode de conduite activé.

Le dispositif d'affichage peut comprendre le tableau de bord du véhicule et/ou la façade centrale du véhicule, et/ou un affichage tête haute sur le pare-brise, ou Head up display, d'acronyme HUD en termes anglo-saxons, quand celui-ci est disponible.

On pourrait également prévoir un écran nomade pour l'affichage des informations.

Avantageusement, le système comprend un dispositif configuré pour faire défiler les informations contenues dans le mode d'affichage sélectionné.

Ledit dispositif est un bouton supplémentaire situé sur la console centrale. Le défilement des informations contenues dans le premier mode d'affichage s'effectue par pression sur le bouton ou rotation dudit bouton. En variante, on pourrait prévoir que ledit dispositif soit intégré au dispositif de sélection du mode d'affichage, par exemple en le faisant tourner, ou encore intégré aux manettes de commande des essuie-glaces ou des clignotants.

Par exemple, un des au moins trois modes d'affichage est un mode d'affichage centré sur le véhicule et comprenant des informations sur les paramètres du véhicule compris dans la liste comprenant au moins la vitesse moyenne de roulage, la consommation instantanée, la consommation moyenne, le kilométrage total, la pression des pneus l'état activé ou non des systèmes d'aides à la conduite, le mode de conduite, l'état des différents capteurs, tel que par exemple des radars, des lasers, des caméras ou de ultrasons présents sur le véhicule, lesdites informations du mode d'affichage centré sur le véhicule étant affichées sur le tableau de bord uniquement à la demande et s'affichant successivement.

Lesdites informations du mode d'affichage centré sur le véhicule peuvent être dupliquées sur l'affichage tête haute.

Les informations de pression des pneus et de l'état des différents capteurs peuvent être affichées, de manière détaillée, en façade centrale.

Avantageusement, un des au moins trois modes d'affichage est un mode d'affichage centré sur l'environnement proche du véhicule et comprenant des informations de perception de l'environnement de conduite du véhicule, compris dans la liste comprenant au moins la détection de la voie, la position de la voie, la détection des véhicules à proximité du véhicule automobile, l'évolution de la distance inter-véhicule en fonction de la vitesse de roulage du véhicule automobile, la trajectoire projetée, lesdites informations du mode d'affichage centré sur l'environnement proche du véhicule étant affichées sur le tableau de bord par enclenchement dudit mode d'affichage.

Lesdites informations dudit mode d'affichage peuvent être dupliquées sur l'affichage tête haute.

Avantageusement, un des au moins trois modes d'affichage est un mode d'affichage centré sur la connexion avec autrui et comprenant des informations de connexion avec autrui dans un environnement proche du véhicule et un mode d'affichage centré sur les points d'intérêts et comprenant des informations sur les points d'intérêts situés dans l'environnement proche du véhicule, les informations des modes d'affichage centrés respectivement sur la connexion avec autrui et sur les points d'intérêts sont affichées sur l'écran central et sont accessibles par enclenchement du mode d'affichage correspondant.

Les informations du mode d'affichage centré sur la connexion avec autrui comprennent, de manière non limitative, toute information permettant d'établir un lien avec un utilisateur à proximité du véhicule automobile, notamment avec les utilisateurs inscrits sur les réseaux sociaux auxquels le conducteur est inscrit, et qui, soit empruntent la même route au même moment, soit vont à la même destination au même moment, ou soit font une pause au même endroit et au même moment.

Les informations du mode d'affichage centré sur les points d'intérêts comprennent, de manière non limitative, toute information qui décentre du véhicule et d'autrui dans l'environnement à proximité du véhicule, notamment les points d'intérêts comme les sites naturels, les sites historiques, la faune, la flore, les anecdotes locales etc...

Avantageusement, un des au moins trois modes d'affichage est un mode d'affichage automatique configuré pour adapter automatiquement le contenu de l'affichage au mode de conduite sélectionné et peut être personnalisé par l'utilisateur, ledit mode d'affichage automatique n'étant pas activable en conduite manuelle.

Le dispositif de sélection du mode d'affichage automatique peut être intégré au dispositif de sélection des modes d'affichage précédents.

Toutefois, on pourrait prévoir que le dispositif de sélection du mode automatique soit un bouton mécanique ou tactile sur l'écran central, distinct du dispositif de sélection des modes d'affichage précédents.

Lorsque le mode d'affichage automatique est sélectionné, les informations des modes d'affichage centrés respectivement sur la connexion avec autrui et sur les points d'intérêts sont affichées sur l'écran central en fonction des préférences préalablement renseignées par l'utilisateur.

Ainsi, soit seulement les informations du mode d'affichage centré sur la connexion avec autrui sont affichées, soit seulement les informations du mode centré sur les points d'intérêts sont affichées, soit les informations du mode d'affichage centré sur la connexion avec autrui sont affichées en priorité, et peuvent être, selon un mode de réalisation non limitatif, entrecoupées de fenêtres pop-up des informations du mode d'affichage centré sur les points d'intérêts, pour alerter de la proximité d'un point d'intérêts. Selon une variante, on pourrait prévoir que les informations dudit mode d'affichage centré sur les points d'intérêts soient affichées en priorité, entrecoupées de fenêtres pop-up des informations du mode d'affichage centré sur la connexion avec autrui, pour alerter de la proximité d'une communauté. L'utilisateur peut également prévoir de ne pas afficher les informations desdits modes d'affichage lors de la sélection du mode automatique. Dans ce cas, l'écran d'affichage central affichera des informations classiques, de type radio, confort thermique ou encore navigation.

Avantageusement, un des au moins trois modes d'affichage est un mode d'affichage décentré du véhicule comprenant des informations de connexion indépendante du trajet effectué. Les informations du mode d'affichage décentré sont affichées sur l'écran central et sont accessibles par enclenchement dudit mode d'affichage en fonction des préférences préalablement renseignées par l'utilisateur. Par exemple, les informations du mode d'affichage décentré peuvent être entrecoupées de fenêtres pop-up relatives aux informations des modes d'affichage centrés respectivement sur la connexion avec autrui et les points d'intérêts. Les informations de ce mode d'affichage décentré ne sont pas disponibles lorsque le mode d'affichage automatique est sélectionné.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente schématiquement système 10 d'affichage d'informations d'un véhicule automobile selon l'invention
- la figure 2 est un tableau représentant l'affichage des informations du premier mode M1 en fonction du mode de conduite MC et du premier ou sixième mode d'affichage sélectionné M1 ou M6 ;
- la figure 3 est un tableau représentant l'affichage des informations du deuxième mode M2 en fonction du mode de conduite MC et du deuxième ou sixième mode d'affichage sélectionné M2 ou M6 ; et
- la figure 4 est un tableau représentant l'affichage des informations des troisième et quatrième mode M3, M4 en fonction du mode de conduite MC et du troisième, quatrième ou sixième mode M3, M4, M6 d'affichage sélectionné.

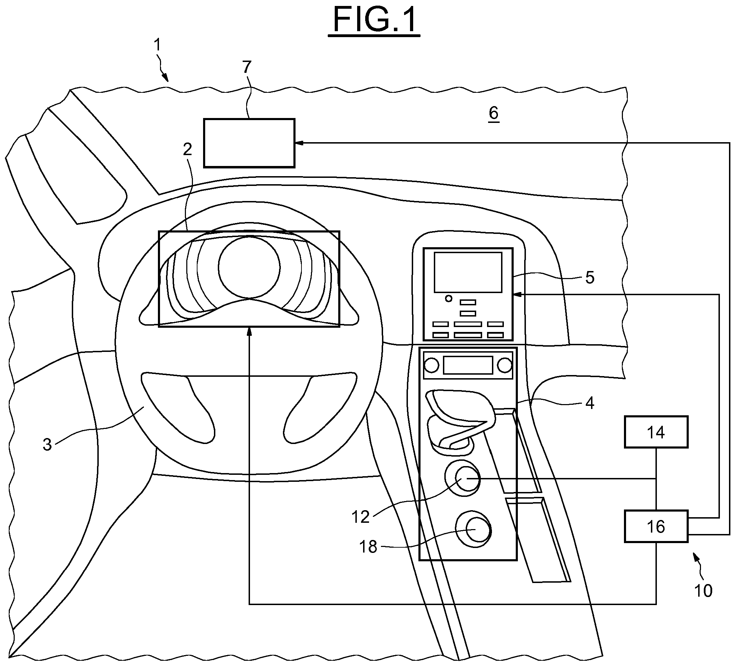

Sur la figure 1, on a représenté de manière très schématique un système 10 d'affichage d'informations destiné à être intégré dans un véhicule automobile 1 dont une partie de l'habitacle est représentée sur la figure 1. Le véhicule automobile 1 comprend un tableau de bord 2, situé derrière un volant 3, une console centrale 4, un écran d'affichage en façade centrale 5, un pare-brise avant 6.

Le système 10 d'affichage comprend un dispositif de sélection 12, par exemple activable manuellement ou automatiquement parmi une pluralité de modes d'affichage M contenant chacun des informations présentant des degrés progressifs de décentrage, en partant du mode d'affichage contenant des informations les plus centrées par rapport au véhicule et à son environnement proche vers le mode d'affichage contenant des informations les plus décentrées, c'est-à-dire éloignées, par rapport au véhicule et à son environnement proche.

Le système 10 d'affichage comprend en outre un module 14 de vérification du mode de conduite MC activé, tel que par exemple le mode de conduite manuelle MC_manuelle, le mode de conduite semi-autonome MC_semiauto ou le mode de conduite autonome MC_auto).

Le système 10 d'affichage comprend un module 16 de transmission de l'affichage sur un ou plusieurs dispositifs d'affichage 2, 5, 7 en fonction du mode M d'affichage sélectionné et du mode de conduite MC activé.

Les dispositifs d'affichage comprennent le tableau de bord 2 du véhicule, la façade centrale 5 du véhicule, ou encore l'affichage tête haute 7 sur le pare-brise 6, ou Head up display, d'acronyme HUD en termes anglo-saxons, quand celui-ci est disponible.

Le système 10 d'affichage comprend également un dispositif 18 configuré pour faire défiler les informations contenues dans le mode M d'affichage sélectionné.

Tel qu'illustré, le dispositif de sélection 12, activable par exemple de manière manuelle ou automatique, parmi la pluralité de modes d'affichage M est un bouton rotatif situé sur la console centrale 4. En variante, on pourrait prévoir un bouton rotatif situé sur la planche de bord, ou encore situé sur la manette d'essuie-glace ou de clignotants.

La pluralité de modes d'affichage M comprend six modes d'affichage M1 à M6. Chaque mode d'affichage M correspond à un niveau d'information, du plus centrée sur le véhicule au plus décentrée selon la gradation suivante :
Le premier mode d'affichage M1 correspond au mode le plus centré sur le véhicule et comprend les informations sur les paramètres du véhicule.

Les paramètres du véhicule comprennent, de manière non limitative, la vitesse moyenne de roulage Vmoy, la consommation instantanée Cons_t, la consommation moyenne Cons_moy, le kilométrage total Km_total, la pression des pneus P, l'état activé ou non des systèmes d'aides à la conduite, comme par exemple, les systèmes d'aide au maintien de voie dits « lane keeping assist », d'acronyme « LKA » en termes anglo-saxons, les systèmes dits « lane centering assist», d'acronyme « LCA » en termes anglo-saxons, ou encore des systèmes d'aide dits « adaptive cruise control », d'acronyme « ACC » en termes anglo-saxons. Les paramètres du véhicule comprennent également l'état des différents capteurs C, par exemple les radars, les lasers, les caméras ou les ultrasons présents sur le véhicule.

Les informations du premier mode d'affichage M1 sont affichées sur le tableau de bord 2 et peuvent être dupliquées sur l'affichage tête haute 7. Les informations de pression des pneus et de l'état des différents capteurs peuvent être affichées, de manière détaillée, en façade centrale 5.

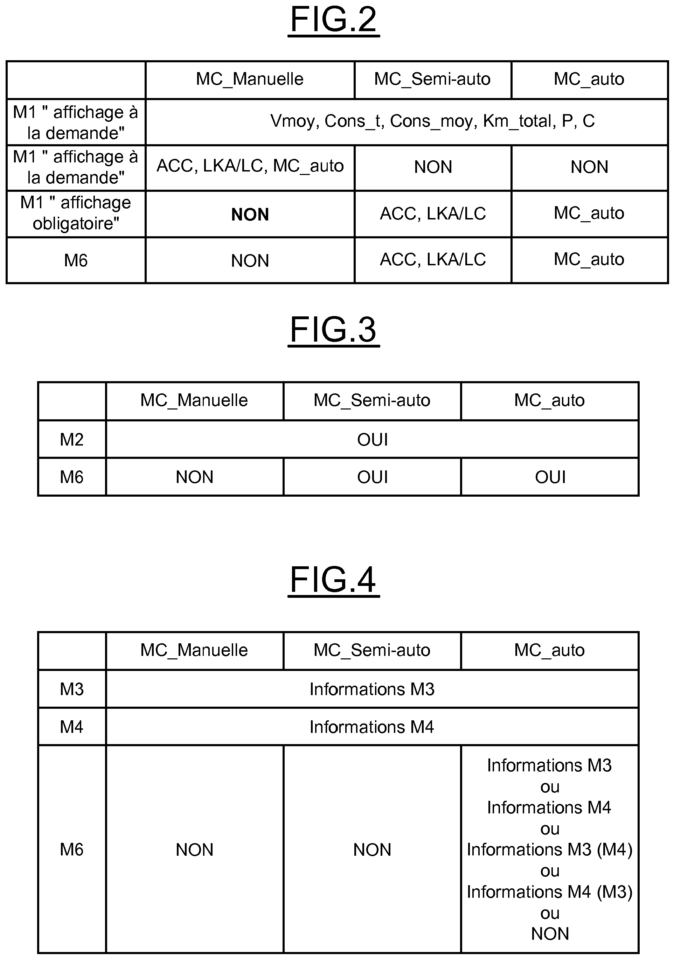

Le tableau illustré sur la figure 2 représente l'affichage des informations du mode M1 en fonction du mode de conduite MC et du mode d'affichage sélectionné M1 ou M6.

Les informations sur les paramètres du véhicule sont accessibles uniquement à la demande, et s'affichent les unes après les autres, c'est-à-dire de manière successive, suite à l'enclenchement du dispositif 18 configuré pour faire défiler les informations contenues dans le mode M d'affichage sélectionné. Tel qu'illustré, ledit dispositif 18 est un bouton supplémentaire situé sur la console centrale 4. Le défilement des informations contenues dans le mode d'affichage M s'effectue par pression sur le bouton ou rotation dudit bouton. En variante, on pourrait prévoir que ledit dispositif 18 soit intégré au dispositif de sélection 12 du mode d'affichage, par exemple en le faisant tourner, ou encore intégré aux manettes de commande des essuie-glaces ou des clignotants.

En mode de conduite semi-autonome MC_semiauto, l'état activé des systèmes d'aide à la conduite, tel que le système d'aide au maintien de voie, d'acronyme « LKA » en termes anglo-saxons, le système d'acronyme « LCA » en termes anglo-saxons, et le système d'aide d'acronyme « ACC » en termes anglo-saxons, s'affiche en permanence, qu'un mode d'affichage M, quel qu'il soit, soit sélectionné ou non.

En mode de conduite autonome MC_auto, l'état activé du mode conduite autonome MC_auto s'affiche en permanence, qu'un mode d'affichage M, quel qu'il soit, soit sélectionné ou non.

Lorsque le mode automatique M6 est sélectionné, parmi les informations du mode M1, seul l'état activé des systèmes d'aide à la conduite ou du mode conduite autonome MC_auto s'affiche, respectivement en mode conduite semi-autonome MC_semiauto et en mode conduite autonome MC_auto.

Ainsi, on a deux zones dédiées à l'affichage, à savoir une zone fixe et une zone déroulante.

Le deuxième mode d'affichage M2 correspond au mode centré sur l'environnement proche du véhicule et comprend les informations de perception de l'environnement de conduite du véhicule.

Les informations de perception de l'environnement de conduite du véhicule comprennent, de manière non limitative, la détection de la voie, la position de la voie, la détection des véhicules à proximité du véhicule automobile, l'évolution de la distance inter-véhicule en fonction de la vitesse de roulage du véhicule automobile, la trajectoire projetée.

Les informations du deuxième mode d'affichage M2 sont affichées sur le tableau de bord 2 et peuvent être dupliquées sur l'affichage tête haute 7.

Le tableau illustré sur la figure 3 représente l'affichage des informations du mode M2 en fonction du mode de conduite MC, et du mode d'affichage sélectionné M2 ou M6.

Les informations du deuxième mode d'affichage M2 sont accessibles par enclenchement du mode d'affichage M2, quel que soit le mode de conduite MC, ou par enclenchement du mode d'affichage M6 en mode de conduite MC semiauto ou MC_auto.

Le troisième mode d'affichage M3 correspond au mode centré sur la connexion avec autrui et comprend les informations de connexion avec autrui dans un environnement proche du véhicule, comprenant, de manière non limitative, toute information permettant d'établir un lien avec un utilisateur à proximité du véhicule automobile, notamment avec les utilisateurs inscrit sur les réseaux sociaux auxquels le conducteur est inscrit, et qui, soit empruntent la même route au même moment, soit vont à la même destination au même moment, ou soit font une pause au même endroit et au même moment.

Les informations du troisième mode d'affichage M3 sont affichées sur l'écran central 5 et sont accessibles par enclenchement du mode d'affichage M3.

Le quatrième mode d'affichage M4 correspond au mode centré sur les points d'intérêts et comprend les informations sur les points d'intérêts situés dans l'environnement proche du véhicule, comprenant, de manière non limitative, toute information qui décentre du véhicule et d'autrui dans l'environnement à proximité du véhicule, notamment les points d'intérêts comme les sites naturels, les sites historiques, la faune, la flore, les anecdotes locales etc...

Les informations du quatrième mode d'affichage M4 sont affichées sur l'écran central 5 et sont accessibles par enclenchement du mode d'affichage M4. Elles peuvent être couplées, par exemple, à un audio-guide, qui peut être sélectionné par l'utilisateur.

Le tableau illustré sur la figure 4 représente l'affichage des informations des modes M3 et M4 en fonction du mode de conduite MC, et du mode d'affichage sélectionné M3, M4 ou M6.

Lorsque le mode M6 est sélectionné, les informations des troisième et quatrième modes M3, M4 sont affichées sur l'écran central 5 en fonction des préférences préalablement renseignées par l'utilisateur.

Ainsi, soit seulement les informations du troisième mode M3 sont affichées, soit seulement les informations du quatrième mode M4 sont affichées, soit les informations du troisième mode M3 sont affichées en priorité, entrecoupées de fenêtres pop-up des informations du quatrième mode M4, pour alerter de la proximité d'un point d'intérêts, soit les informations du quatrième mode M4 sont affichées en priorité, entrecoupées de fenêtres pop-up des informations du troisième mode M3, pour alerter de la proximité d'une communauté. L'utilisateur peut également prévoir de ne rien afficher lors de la sélection du mode automatique M6.

Le cinquième mode d'affichage M5 correspond au mode le plus décentré du véhicule et de son environnement proche et comprend les informations de connexion indépendante du trajet effectué.

Les informations du cinquième mode d'affichage M5 sont affichées sur l'écran central 5 et sont accessibles par enclenchement du mode d'affichage M5 en fonction des préférences préalablement renseignées par l'utilisateur. Par exemple, les informations du cinquième mode M5 peuvent être entrecoupées de fenêtres pop-up relatives aux informations du troisième et quatrième mode M3, M4. Les informations de ce cinquième M5 ne sont pas disponibles lorsque le sixième mode d'affichage M6 est sélectionné.

Le sixième mode d'affichage M6 correspond à un mode automatique. Ce sixième mode n'est pas activable en conduite manuelle. Ce mode d'affichage M6 automatique est configuré pour adapter automatiquement le contenu de l'affichage au mode de conduite MC sélectionné et peut être personnalisé par l'utilisateur.

Le dispositif de sélection du sixième mode M6 automatique peut être intégré au dispositif de sélection 12 des modes d'affichage M1 à M5. Toutefois, on pourrait prévoir que le dispositif de sélection du mode automatique soit un bouton mécanique ou tactile sur l'écran central, distinct du dispositif de sélection 12 des modes d'affichage M1 à M5.

Lorsqu'une information est affichée en façade centrale sur l'afficheur 5, elle peut occuper par exemple 90% de la zone d'affichage. Lorsqu'une nouvelle information est affichée, elle prend la place de l'information précédente, qui va alors se réduire, par exemple dans un bandeau de sélection, pour occuper par exemple 10% de la zone d'affichage.

En variante, on pourrait afficher les informations sur un écran nomade à la place de l'écran central 5 du véhicule automobile.

Grâce au système d'affichage selon l'invention, l'affichage d'informations est décentré du conducteur à mesure que l'information est décentrée du véhicule et de son environnement.

## Revendications

1. Système (10) d'affichage d'informations destiné à être intégré dans un véhicule automobile (1) comprenant au moins un tableau de bord (2), une console centrale (4), un écran d'affichage en façade centrale (5) et un pare-brise avant (6), ledit système d'affichage (10) étant **caractérisé en ce qu'**il comprend :
- un dispositif de sélection (12), manuelle ou automatique, parmi au moins trois modes d'affichage (M1, M2, M3, M4, M5, M6) contenant chacun des informations présentant des niveaux progressifs de décentrage par rapport au véhicule,
- un module (14) de vérification du mode de conduite (MC) activé, ledit module de conduite (MC) étant choisi parmi un mode de conduite manuelle, un mode de conduite semi-autonome et un mode de conduite autonome,
- un module (16) de transmission de l'affichage sur au moins un dispositif d'affichage (2, 5, 7) en fonction du mode d'affichage (M1, M2, M3, M4, M5, M6) sélectionné et du mode de conduite (MC) activé.

2. Système selon la revendication 1, dans lequel le dispositif d'affichage (2, 5, 7) comprend le tableau de bord (2) du véhicule, et/ou la façade centrale (5) du véhicule, et/ou un affichage tête haute (7) sur le pare-brise (6).

3. Système selon l'une quelconque des revendications précédentes, comprenant un dispositif (18) configuré pour faire défiler les informations contenues dans le mode d'affichage (M1, M2, M3, M4, M5, M6) sélectionné.

4. Système selon la revendication 3, dans lequel un des au moins trois modes d'affichage (M1, M2, M3, M4, M5, M6) est un mode d'affichage (M1) centré sur le véhicule comprenant des informations sur les paramètres du véhicule compris dans la liste comprenant au moins la vitesse moyenne de roulage (Vmoy), la consommation instantanée (Cons_t), la consommation moyenne (Cons_moy), le kilométrage total (Km_total), la pression des pneus (P), l'état activé ou non des systèmes d'aides à la conduite (ACC, LKA, LC), le mode de conduite (MC), l'état des différents capteurs (C) présents sur le véhicule, lesdites informations du mode d'affichage (M1) centré sur le véhicule étant affichées sur le tableau de bord (2) uniquement à la demande et s'affichant successivement par le dispositif (18) configuré pour faire défiler les informations.

5. Système selon l'une quelconque des revendications précédentes, dans lequel un des au moins trois modes d'affichage (M1, M2, M3, M4, M5, M6) est un mode d'affichage (M2) centré sur l'environnement proche du véhicule comprenant des informations de perception de l'environnement de conduite du véhicule, compris dans la liste comprenant au moins la détection de la voie, la position de la voie, la détection des véhicules à proximité du véhicule automobile, l'évolution de la distance inter-véhicule en fonction de la vitesse de roulage du véhicule automobile, la trajectoire projetée, lesdites informations du mode d'affichage (M2) centré sur l'environnement proche du véhicule étant affichées sur le tableau de bord (2) par enclenchement du deuxième mode d'affichage (M2).

6. Système selon l'une quelconque des revendications précédentes, dans lequel un des au moins trois modes d'affichage (M1, M2, M3, M4, M5, M6) est un mode d'affichage centré sur la connexion avec autrui (M3) comprenant des informations de connexion avec autrui dans un environnement proche du véhicule et un mode d'affichage centré sur les points d'intérêts (M4) comprenant des informations sur les points d'intérêts situés dans l'environnement proche du véhicule, les informations desdits modes d'affichage (M3, M4) étant affichées sur l'écran central (5) et étant accessibles par enclenchement du mode d'affichage correspondant.

7. Système selon l'une quelconque des revendications précédentes, dans lequel un des au moins trois modes d'affichage (M1, M2, M3, M4, M5, M6) est un mode d'affichage automatique (M6) configuré pour adapter automatiquement le contenu de l'affichage au mode de conduite (MC) sélectionné et pouvant être personnalisé par l'utilisateur, ledit mode d'affichage automatique (M6) n'étant pas activable en conduite manuelle.

8. Système selon la revendication 7e, dans lequel le dispositif de sélection du mode d'affichage automatique est un bouton mécanique ou tactile sur l'écran central, distinct du dispositif de sélection (12) des modes d'affichage précédents (M1 à M5).

## Patentansprüche

1. System (10) zur Anzeige von Informationen, das dazu bestimmt ist, in ein Kraftfahrzeug (1) integriert zu werden, das mindestens ein Armaturenbrett (2), eine Mittelkonsole (4), einen Anzeigebildschirm am zentralen Frontteil (5) und eine Frontscheibe (6) enthält, wobei das Anzeigesystem (10) **dadurch gekennzeichnet ist, dass** es enthält:
- eine Vorrichtung (12) zur manuellen oder automatischen Auswahl unter mindestens drei Anzeigemodi (M1, M2, M3, M4, M5, M6), die je Informationen enthalten, die progressive Dezentrierungsstufen bezüglich des Fahrzeugs aufweisen,
- ein Überprüfungsmodul (14) des aktivierten Fahrmodus (MC), wobei das Fahrmodul (MC) unter einem manuellen Fahrmodus, einem halbautonomen Fahrmodus und einem autonomen Fahrmodus ausgewählt wird,
- ein Übertragungsmodul (16) der Anzeige auf mindestens eine Anzeigevorrichtung (2, 5, 7) abhängig vom ausgewählten Anzeigemodus (M1, M2, M3, M4, M5, M6) und vom aktivierten Fahrmodus (MC) .

2. System nach Anspruch 1, wobei die Anzeigevorrichtung (2, 5, 7) das Armaturenbrett (2) des Fahrzeugs und/oder den zentralen Frontteil (5) des Fahrzeugs und/oder ein Head-up-Display (7) auf der Frontscheibe (6) enthält.

3. System nach einem der vorhergehenden Ansprüche, das eine Vorrichtung (18) enthält, die konfiguriert ist, die im ausgewählten Anzeigemodus (M1, M2, M3, M4, M5, M6) enthaltenen Informationen zu scrollen.

4. System nach Anspruch 3, wobei einer der mindestens drei Anzeigemodi (M1, M2, M3, M4, M5, M6) ein auf das Fahrzeug zentrierter Anzeigemodus (M1) ist, der Informationen über die Parameter des Fahrzeugs enthält, die in der Liste enthalten sind, die mindestens die mittlere Fahrgeschwindigkeit (Vmoy), den augenblicklichen Verbrauch (Cons_t), den mittleren Verbrauch (Cons_moy), den Gesamtkilometerstand (Km _total), den Reifendruck (P), den aktivierten oder nicht aktivierten Zustand der Fahrassistenzsysteme (ACC, LKA, LC), den Fahrmodus (MC), den Zustand der verschiedenen auf dem Fahrzeug vorhandenen Sensoren (C) enthält, wobei die Informationen des auf das Fahrzeug zentrierten Anzeigemodus (M1) auf dem Armaturenbrett (2) nur auf Anforderung angezeigt werden, und nacheinander durch die Vorrichtung (18) angezeigt werden, die konfiguriert ist, um die Informationen zu scrollen

5. System nach einem der vorhergehenden Ansprüche, wobei einer der mindestens drei Anzeigemodi (M1, M2, M3, M4, M5, M6) ein auf die nahe Umgebung des Fahrzeugs zentrierter Anzeigemodus (M2) ist, der Wahrnehmungsinformationen der Fahrumgebung des Fahrzeugs enthält, die in der Liste enthalten sind, die mindestens die Erkennung der Fahrspur, die Position der Fahrspur, die Erkennung der Fahrzeuge in der Nähe des Kraftfahrzeugs, die Entwicklung des Abstands zwischen Fahrzeugen abhängig von der Fahrgeschwindigkeit des Kraftfahrzeugs, die projizierte Strecke enthalten, wobei die Informationen des auf die nahe Umgebung des Fahrzeugs zentrierten Anzeigemodus (M2) auf dem Armaturenbrett (2) durch Einschalten des zweiten Anzeigemodus (M2) angezeigt werden.

6. System nach einem der vorhergehenden Ansprüche, wobei einer der mindestens drei Anzeigemodi (M1, M2, M3, M4, M5, M6) ein auf die Verbindung mit Anderen (M3) zentrierter Anzeigemodus ist, der Verbindungsinformationen mit Anderen in einer nahen Umgebung des Fahrzeugs enthält und ein auf die in der nahen Umgebung des Fahrzeugs befindlich zentrierten Anzeigemodus (Ml) en interessierenden Punkte (M4) zentrierter Anzeigemodus ist, der Informationen über die in der nahen Umgebung des Fahrzeugs befindlichen interessierenden Punkte enthält, wobei die Informationen der Anzeigemodi (M3, M4) auf dem zentralen Bildschirm (5) angezeigt werden und durch Einschalten des entsprechenden Anzeigemodus zugänglich sind.

7. System nach einem der vorhergehenden Ansprüche, wobei einer der mindestens drei Anzeigemodi (M1, M2, M3, M4, M5, M6) ein automatischer Anzeigemodus (M6) ist, der konfiguriert ist, den Inhalt der Anzeige automatisch an den ausgewählten Fahrmodus (MC) anzupassen, und der vom Benutzer personalisiert werden kann, wobei der automatische Anzeigemodus (M6) beim manuellen Fahren nicht aktiviert werden kann.

8. System nach Anspruch 7e, wobei die Auswahlvorrichtung des automatischen Anzeigemodus eine mechanische oder berührungsempfindliche Taste auf dem zentralen Bildschirm ist, die sich von der Auswahlvorrichtung (12) der vorhergehenden Anzeigemodi (M1 bis M5) unterscheidet.

## Claims

1. Information display system (10) intended to be integrated into a motor vehicle (1) comprising at least a dashboard (2), a central console (4), a display screen on the central panel (5) and a front windscreen (6), said display system (10) being **characterized in that** it comprises:
- a selection device (12) for manually or automatically selecting from among at least three display modes (M1, M2, M3, M4, M5, M6) each containing information having progressive levels of off-centering with respect to the vehicle,
- a verification module (14) for verifying the activated driving mode (MC), said driving module (MC) being chosen from among a manual driving mode, a semi-autonomous driving mode and an autonomous driving mode,
- a transmission module (16) for transmitting the display on at least one display device (2, 5, 7) depending on the selected display mode (M1, M2, M3, M4, M5, M6) and on the activated driving mode (MC).

2. System according to Claim 1, wherein the display device (2, 5, 7) comprises the dashboard (2) of the vehicle, and/or the central panel (5) of the vehicle, and/or a head-up display (7) on the windscreen (6).

3. System according to either one of the preceding claims, comprising a device (18) configured so as to scroll through the information contained in the selected display mode (M1, M2, M3, M4, M5, M6).

4. System according to Claim 3, wherein one of the at least three display modes (M1, M2, M3, M4, M5, M6) is a display mode (M1) centered on the vehicle and comprising information about the parameters of the vehicle contained in the list comprising at least average driving speed (Vav), instantaneous consumption (Cons_t), average consumption (Cons_av), total mileage (Km_total), tyre pressure (P), the activated or non-activated state of the driving assistance systems (ACC, LKA, LC), driving mode (MC), the state of the various sensors (C) present on the vehicle, said information in the display mode (M1) centered on the vehicle being displayed on the dashboard (2) only upon request and being displayed in succession by the device (18) configured so as to scroll through the information.

5. System according to any one of the preceding claims, wherein one of the at least three display modes (M1, M2, M3, M4, M5, M6) is a display mode (M2) centered on the nearby surroundings of the vehicle and comprising information about the perception of the driving surroundings of the vehicle, contained in the list comprising at least lane detection, lane position, detection of vehicles close to the motor vehicle, the change in vehicle-to-vehicle distance as a function of the driving speed of the motor vehicle, projected trajectory, said information in the display mode (M2) centered on the nearby surroundings of the vehicle being displayed on the dashboard (2) by triggering the second display mode (M2).

6. System according to any one of the preceding claims, wherein one of the at least three display modes (M1, M2, M3, M4, M5, M6) is a display mode centered on the connection with others (M3) and comprising information about the connection with others in nearby surroundings of the vehicle and a display mode centered on points of interest (M4) and comprising information about points of interest located in the nearby surroundings of the vehicle, the information in said display modes (M3, M4) being displayed on the central screen (5) and being accessible by triggering the corresponding display mode.

7. System according to any one of the preceding claims, wherein one of the at least three display modes (M1, M2, M3, M4, M5, M6) is an automatic display mode (M6) configured so as to automatically adapt the content of the display to the selected driving mode (MC) and able to be customized by the user, said automatic display mode (M6) not being able to be activated in manual driving mode.

8. System according to Claim 7e, wherein the selection device for selecting the automatic display mode is a mechanical or touch button on the central screen, separate from the selection device (12) for selecting the previous display modes (M1 to M5).
